# EUROPEAN PATENT APPLICATION

(11) **EP 2 269 925 A1**
(43) Date of publication of application: **05.01.2011**
(21) Application number: 09164165.4
(22) Date of filing: 30.06.2009
(51) Int. Cl.: B65G 59/02

(54) **Unload system**

(71) Applicant: Deutsche Post AG, 53113 Bonn (DE)
(72) Inventor: Lemola, Jussi, 02100 Espoo (FI)
(74) Representative: Jostarndt, Hans-Dieter

(57) **Abstract**

The invention relates to an unload system suitable to assist the unloading of a pallet (1) with stacked objects (2) on top of the pallet (1) comprising a platform (41) suitable to carry at least one pallet (1) on top of the platform (41) and lifting means (4) to adjust the vertical position of the platform (41) to a loading level (L3) of a transport means (3) for carrying the unloaded objects in order to minimize vertical movements of objects (2) during moving the objects (2) from the pallet (1) to the transport means (3), to a method to unload the pallet (1) using the unload system and to a data storage medium comprising a computer program performing the method to unload the pallet (1).

## Description

### Field of the invention

This invention relates to an unload assistant suitable to unload a pallet with multiple loaded objects, to a method to perform the unloading and to a storage medium carrying a program to perform the method.

### Background of the invention

Document EP0283042 discloses a loading system to load a pallet with objects from a transport belt. The objects are transferred from a transporting belt to a lifting platform, which vertical position is aligned to the level of the transport belt. After loading the object to the lifting platform, the lifting platform is lowered to align the upper surface of the loaded object to the level of the transport belt and the next object is loaded on top of the previous object. To adjust the position of the lifting platform in order to align the upper surface of the loaded object to the level of the transport belt, sensors arranged on the transport belt measure each height of the to-be-loaded objects on the transport belt. The measuring system is applicable to single objects transported separately on top of a transport belt. Unfortunately this system is not applicable to unload a pallet loaded with stacked objects.

There is no a support system available for unloading pallets in order to prevent workers from carrying too heavy objects or objects in non-ergonomic positions and/or to decrease the required time for unloading a pallet.

### Summary of the invention

It is an object of the present invention to provide an unload system preventing workers from carrying too heavy objects or objects in non-ergonomic positions during the unload process and to decrease the required time for unloading a pallet.

The object is solved by an unload system suitable to assist the unloading of a pallet with stacked objects on top of the pallet comprising a platform suitable to carry at least one pallet on top of the platform and lifting means to adjust the vertical position of the platform to a loading level of a transport means for carrying the unloaded objects in order to minimize vertical movements of objects during moving the objects from the pallet to the transport means.

The lifting means to adapt the vertical position of the platform may be any suitable means to move the platform with loaded pallets on top of it upwards or downwards. As an example the lifting means may be a hydraulic hoist or hydraulic actuators. Alternatively the platform may be lifted by an electric motor or electric actuator or any other hoist motor or a spindle. In a preferred embodiment, the lifting means should be able to lift also heavy pallets of at least 900 kg (loadable weight of an EU pallet). People skilled in the art are able to choose suitable lifting means within the scope of this invention. The vertical adjustment of the platform may be performed manually by a worker via a switch or control panel or automatically.

The loading level of the transport means denotes the level (or height above the floor = height above floor level) of the upper surface of the transport means. The bottom surface of the object is moved along the upper surface of the transport means. The vertical movements of objects during unloading the pallet (moving of objects from the pallet on top of the transport means) shall be minimized, preferably avoided. Here the transport means is at least one element of the group of conveyor belt (e.g. rubber conveyor belt), roller belt, chute or combinations thereof as used in automatic distribution systems as a labor saving system that allows large volumes to move rapidly.

In an embodiment the lifting means are arranged in a cavity suitable to lower the vertical position of the platform below a floor level and/or to raise the vertical position of the platform above the floor level in order to minimize the required vertical movements of the highest and lowest stacked objects during moving the objects from the pallet to the transport means. Stacked pallets carry several objects. The height of stacked pallets usually exceeds the height of the loading level of any neighbored transport means for unloading the pallet. Therefore a cavity is required to adjust the uppermost objects on a stacked pallet to the loading level of the transport means by lowering the platform level beneath the floor level. The floor level denotes the location of the surface of the floor.

In another embodiment the unload system further comprises a detection system suitable to provide a control signal to a control means, preferably a personal computer, in order to adjust the vertical position of the platform via the lifting means. In an embodiment the detection system comprises an optical system suitable to perform an image recognition. The detection system may comprise cameras, preferably CCD cameras, and preferably a computer suitable to analyze the recorded image of the stacked pallet in order to identify single objects and their dimensions. For example, the edges of an object cause a shaded line with a different brightness compared to the brightness of light reflected from the sidewalls of an object. Such varying brightness pattern can be used to identify the dimensions of an object. To enhance the accuracy to detect the dimensions of an object, the system may further comprise light sources to illuminate the stacked pallets on top of the platform in a suitable way to pronounce the shading casting of edges, for example providing a grazing incidence of light to the side faces of the stacked pallet, preferably from two directions: vertically and horizontally direction with respect to the floor. Any wrapping of pallets may disturb an image recognition system, but the wrapping has to be removed anyhow before unloading the pallet.

In another embodiment the detection system comprises a non-optical electromagnetic system suitable to receive dimension information, preferably from a dimension means. The dimension information may be stored or provided with freight information attached to the pallet. In another embodiment the objects carry dimension means suitable to provide dimension information of the objects to the detection system, preferably at least one element of the group of barcode, marking tag, marking line, marking symbol, RFID-tag. The dimension means simplifies the requirements to the detection system. The detection system can use information in a predefined manner to determine the dimensions of an object, which avoids highly developed image recognition systems. Marking lines close to the edges of an object are easy to detect and provide reliable information to adjust the edge of an object to the loading level. Barcodes may provide machine readable dimension information, for example the distance from the barcode to the edges of an object or the height of the tagged object. The uppermost surface of a stacked pallet can be easily detected, e.g via a photo sensor. The provided information of the object dimensions can be used to derive the location of the bottom level of the uppermost object from the difference between uppermost surface and the object height provided by a barcode. The same technique can be used, if dimension information is provided via a RFID tag, readable with suitable RFID sensors. Stacked pallets with objects equipped with RFID tags or barcode labels may be scanned from top to bottom the receive all required dimension information and the sequence of the stacked objects. The right platform level to unload the objects can easily be calculated from the scanned information. The dimension means may be glued to the objects, preferably to the sidewalls of the objects to be easier recognized.

In an embodiment the transport means comprises moving means suitable to move the transport means close to the objects to be unloaded. After adjusting the vertical position of the platform to a level, where the lower surface of an object equals the loading level of the transport means, the objects only have to be pushed or pulled from the pallet towards the transport means without any further effort or vertical movements. A worker does not have to support the object to bridge a gap between pallet and transport means, because the gap is closed by moving the transport means towards the pallet.

The lifting means for the platform may comprise at least one element of the group of hydraulic actuators, electric actuators, spindle, hoist motor. In another embodiment, the lifting means are furthermore suitable to tilt the platform of a tilting angle towards the transport means in order to facilitate the moving of objects from the pallet to the transport means. If the objects on a loaded pallet are stacked on top of each other, the objects have to be moved towards the transport means essentially horizontally to prevent the workers from carrying too heavy objects. To move a stacked object workers have to apply a sufficient force to overcome the static friction between the stacked objects. With a horizontal aligned platform, the static friction is proportional to weight of the object times the static friction coefficient. Tilting the platform of a tilting angle, which is the angel between the horizontal position and a tilted position of the platform, lowers the force to be applied to move an object towards the transport means. The tilting angle shall be large enough to support the movement of objects, but not too high to prevent slippage of loaded objects. The weight of objects cannot be determined by image recognition systems without any information carrier attached to the individual objects. Suitable information carriers providing weight information are e.g. barcodes, RFID tags or differently colored stripes indicating a certain weight or range of weights. The weight information may be used to adjust the tilting angle in order to provide support for unloading the objects without introducing a risk of slippage.

In a preferred embodiment, the platform comprises fixation means or a cover at least partly covering the platform at least partly made of a material with a high static friction coefficient to prevent the pallet from slippage on the tilted platform. Suitable fixation means are any means to prevent a slippage of the pallet on top of the tilted platform such as blocks, protruding edges, pins, etc brought into mechanical contact with the pallet in order to prevent any movement of the pallet in a tilted position of the platform. The friction coefficient between wood as a common pallet material and steel as one example of a platform material is 0.5. The static friction coefficient between wood and wood is 0.65, between steel and steel it is 0.15. To avoid a slippage of the pallet the platform may be coated with slip-reducing or slip-free materials, e.g. rubber, or equipped with a slip-reducing or slip-free underlay. People skilled in the art are able to select a suitable coating or underlay to prevent or reduce slippage of pallets due to tiled platforms.

The invention further relates to a method to unload a pallet using an unload system according to the present invention comprising the steps of
- placing a pallet with loaded objects on top of a platform,
- adjusting the vertical position of the platform in order to bring the lower surface of the uppermost objects essentially to the same level as the loading level of the transport means,
- moving the uppermost objects in an essentially horizontal direction to the transport means, and
- repeating steps two and three until the pallet is unloaded.

The term "essential" denotes acceptable deviations between the level of the lower surface of an object to be unloaded from the pallet and the loading level of the transport means not causing any significant additional effort to move the objects on top of the transport means. A deviation of a few centimeters, for example 1 cm, 2cm, 5cm, is considered as acceptable in order to unload objects essentially horizontal.

In an embodiment of the method the step of adjusting the vertical position of the platform comprises the steps of
- automatically detecting the lower surface of the uppermost objects with an detection system comprising an optical or electromagnetic system to receive dimension information of the objects, and
- providing a control signal to a control means, preferably a personal computer, in order to adjust the vertical position of the platform via the lifting means.

In a preferred embodiment the step of adjusting the vertical position of the platform comprises the step of tilting the platform towards the transport means in order to facilitate the moving of objects from the pallet to the transport means.

The invention further relates to a data storage medium comprising a computer program performing the method to unload a pallet according to the present invention. Data storage media may be CD's, DVD's, computer sticks, flash memories, hard disks or any other suitable medium.

The above discussed embodiments are only examples. Skilled people may consider modifications of said embodiments within the scope of this invention. More details of the invention are shown in the following figures and the detailed description of embodiments.

### Brief description of the drawings

- Fig.1:: unload system according to the present invention, with (a) the platform with pallet to be unloaded, (b) lowered position of the pallet to unload the uppermost objects to the transport means, (c) higher position of the platform in order to unload the next level of objects to the transport means, and (d) even higher position of the platform to unload the lowest level of objects on top of the pallet.
- Fig.2:: unloading system according to Fig.1 with movable transport means.
- Fig.3:: unloading system according to the present invention with tilted platform.
- Fig.4:: objects with different means carrying dimension information of the objects.
- Fig.5:: unload system according to the present invention with detection system to adjust the position of the platform.
- Fig.6:: unload system according to the present invention with tilted platform with (a) a coating on top of the platform and (b) with a fixation means to prevent slippage of the pallet on top of the platform.

### Detailed description of embodiments

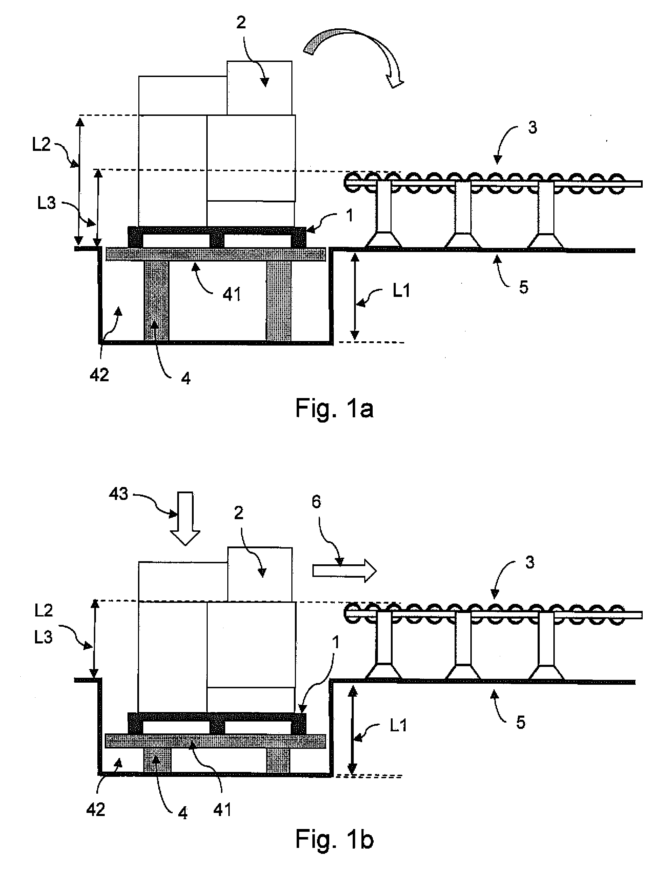

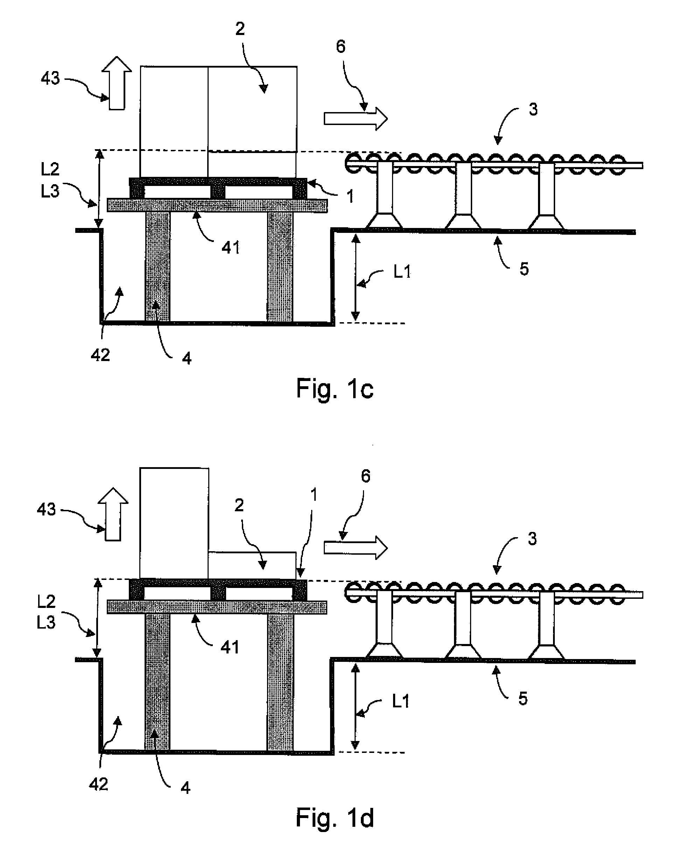

Fig.1 shows an unload system according to the present invention, with (a) the platform 41 with a pallet 1 to be unloaded, (b) lowered position of the pallet 1 to unload the uppermost objects 2 to the transport means 3, (c) higher position of the platform 41 in order to unload the next level of objects 2 to the transport means 3, and (d) even higher position of the platform 41 to unload the lowest level of objects 2 on top of the pallet 1. The platform 41 is moved by lifting means 4 upwards and/or downwards along the moving direction 43 depending on the dimensions of the pallet 1, the stacked objects 2 and the transport means 3. Usually the height of the stacked pallet exceeds the height of the upper surface of the transport means 3 above the floor level 5, indicated as loading level L3. The lifting means 4 adjust the platform 41 in order to equal the height of lower surface above floor level of the uppermost object L2 to the loading level L3. To be able to perform this adjustment even for high stacked pallets 1, the lifting means 4 are arranged in a cavity 42 with a suitable depth L1. People skilled in the art are able to choose L1 in accordance to the known common pallet sizes and heights. The curved arrow in figure 1 a indicates the required movement of objects during the unload process in case of no level adjustments with an unload system according to the present invention. In figures 1b to 1d, where a level adjustment is applied, the objects 2 can be unloaded towards the transport means 3 only by horizontal movements 6 avoiding any non-ergonomic positions and/or movements of workers unloading the pallet 1. The movements 6 may be horizontal or essentially horizontal. The latter term denotes movement in case of slightly misadjusted levels L2 and L3 without any negative impact on the desired ergonomic unload process. As an example, a misalignment of L2 and L3 in the order of a few centimeters will not be notice by workers during the unload process and is still be considered as sufficiently well aligned levels L2 and L3. The adjustment of levels L2 and L3 to the same height may be performed manually by a worker via a switch or control panel or automatically.

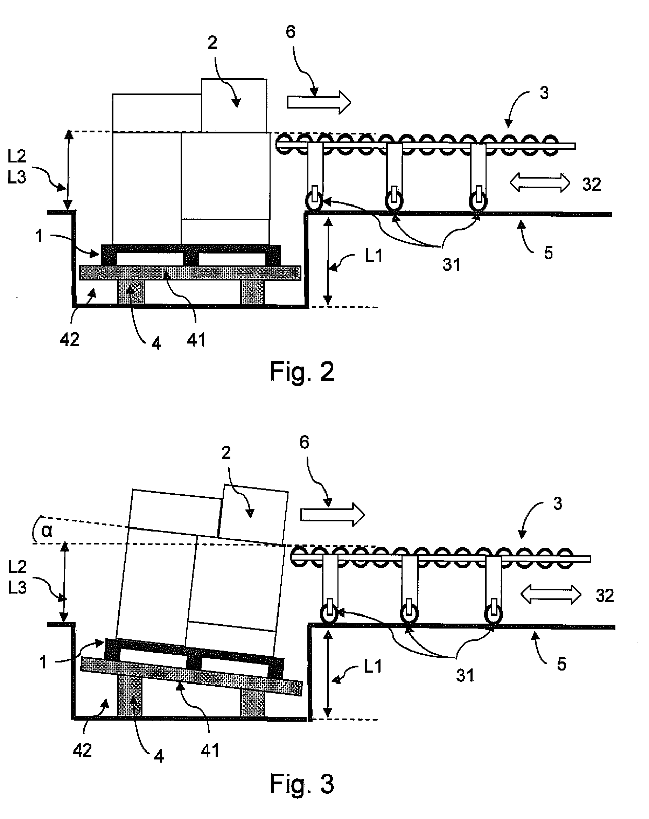

Figure 2 shows another embodiment of the unload system, where the transport means 3 is not fixed to the floor 5, but can be moved towards 32 the pallet 1 to unload the pallet 1 and backwards 32 after completed unloading of the pallet 1 in order to replace the empty pallet 1 by another loaded pallet 1 with stacked objects 2 on top of it. The moving means 31 in order to move the transport means 3 may comprise any suitable moving means, e.g. rolls, wheels, guide rails or tracks. The moving means may allow moving directions 32 in a one dimensional or two dimensional manner.

Figure 3 shows the unload system of figure 2 with the additional opportunity to tilt the platform 41 within the cavity 42 by an tilting angle α. Here the movement 6 to unload the objects 2 towards the transport means 3 is further supported by the downhill-slope force acting on the objects 2 in case of a tilted platform 41. Especially with tilted platforms 41, a movable transport means 3 is advantageous, because the distance between stacked objects and the transport means 3 depends on the tilting angle α. To avoid a disturbing gap between objects 2 and transport means 3, the transport means may be moved towards or backwards along the moving direction 32 to minimize the gap between objects 2 and transport means 3.

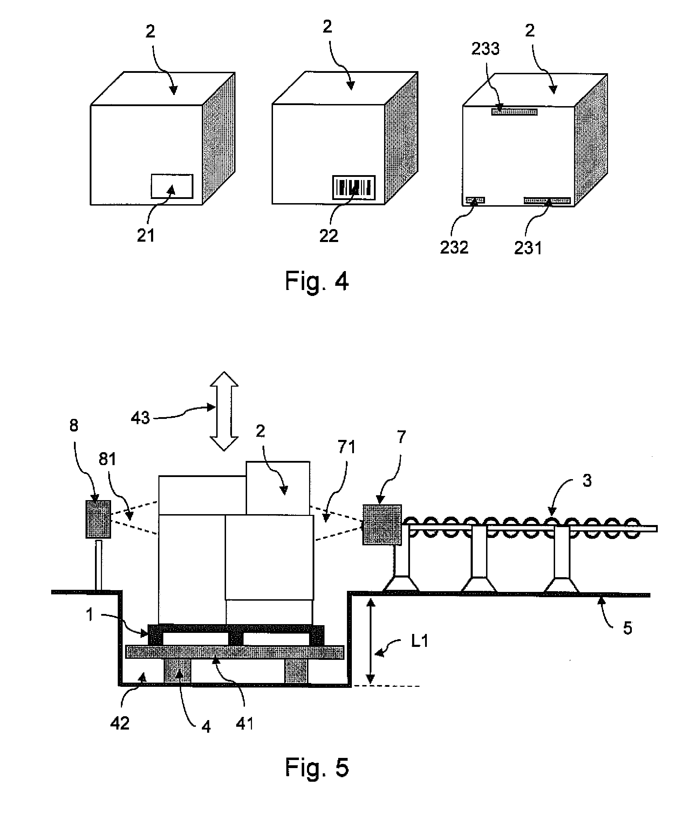

Figure 4 shows different embodiments of possible dimension means 21, 22, 231, 232, 233 to provide information about the object dimension to the unload system. As an example dimension means are RFID tag 21, barcodes 22, marking lines to indicate the bottom of objects 231 and 232, which differ in lengths and/or height, or marking lines indicating the top of objects 233. All these dimension means can be utilized as a marker to provide dimension information to the unload system and to equal or essentially equal the levels L2 and L3. The marking lines may have a certain color easy to indentify or to detect visually.

Figure 5 shows an example of a detection system 7 and 8 suitable to detect the dimension of the objects 2 and/or to receive dimension information from the objects 2. The detection system 7, 8 may be on one side of the pallet, or on two or more sides of the pallet. The detection systems 7 and 8 may be identical or apply different technologies in order to control the lifting means to adjust L2 and L3 to the same level. The detection systems 7, 8 may scan the objects on top of the pallet along a detection angle 71, 81 in order to derive the dimensions of the objects directly or to receive information of the dimensions of the objects.

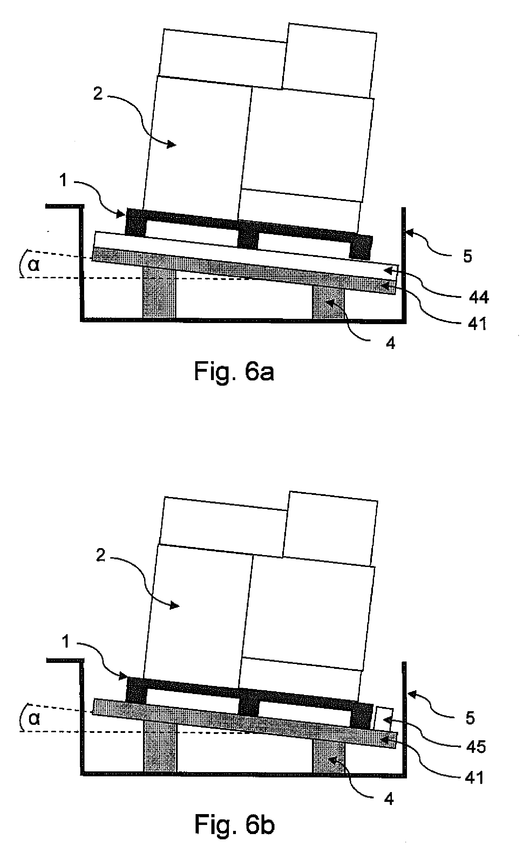

Figures 6a and 6b show two different embodiments of measures to prevent the pallet from slippage in case of a tilted platform 41. In figure 6a said measure is a cover 44 at least partly covering the surface of the platform 41, where this cover is at least partly made of material with a high static friction coefficient, such as rubber or rough plastic. In figure 6b, the platform 41 comprises a fixation means 45 attached to the side of the top surface of the platform 41 facing towards or neighboring the transport means 3. The fixation means may be permanently attached to the platform 41. Fixation means may be any kind of bars or blocks made of a pressure resistant material such as metal, hard plastic or wood.

The shown embodiments must not be considered as limitation of the invention. The discussed embodiments are only examples of the present invention. People skilled in the art may consider alternative embodiments of the previously disclosed invention still falling into the scope of this invention.

### LIST OF NUMERALS

- 1: pallet
- 2: objects
- 21: tag to provide information about object dimensions
- 22: barcode to provide information of object dimensions
- 231: marking line to indicate bottom of objects
- 232: alternative marking line to indicate bottom of objects
- 233: marking line to indicate top of objects
- 3: transport means
- 31: moving means of transport means
- 32: moving direction to move the transport means
- 4: lifting means
- 41: platform
- 42: cavity for lifting means
- 43: moving directing of lifting means
- 44: platform cover
- 45: fixation means, e.g. a stopper
- 5: floor level
- 6: unload direction to unload objects
- 7: detection system
- 71: detection angle
- 8: alternative detection system
- 81: detection angle
- L1: distance between floor level and bottom level of cavity for lifting means
- L2: distance between floor level and lower surface of loaded objects
- L3: loading level of the transport means
- α: tilting angle of platform

## Claims

1. An unload system suitable to assist the unloading of a pallet (1) with stacked objects (2) on top of the pallet (1) comprising a platform (41) suitable to carry at least one pallet (1) on top of the platform (41) and lifting means (4) to adjust the vertical position of the platform (41) to a loading level (L3) of a transport means (3) for carrying the unloaded objects in order to minimize vertical movements of objects (2) during moving the objects (2) from the pallet (1) to the transport means (3).

2. The unload system according to claim 1, **characterized in that** the lifting means (4) are arranged in a cavity (42) suitable to lower the vertical position of the platform (41) below a floor level (5) and/or to raise the vertical position of the platform (41) above the floor level (5) in order to minimize the required vertical movements of the highest and lowest stacked objects (2) during moving the objects (2) from the pallet (1) to the transport means (3).

3. The unload system according to claim 1 or 2 further comprising a detection system (7, 8) suitable to provide a control signal to a control means, preferably a personal computer, in order to adjust the vertical position of the platform (41) via the lifting means (4).

4. The unload system according to claim 3, **characterized in that** the detection system (7, 8) comprises an optical system suitable to perform an image recognition.

5. The unload system according to claim 3, **characterized in that** the detection system (7, 8) comprises a non-optical electromagnetic system suitable to receive dimension information, preferably from a dimension means (21, 22, 231, 232, 233).

6. The unload system according to any of claims 3 to 5, **characterized in that** the objects (2) carry dimension means (21, 22, 231, 232, 233) suitable to provide dimension information of the objects (2) to the detection system (7, 8), preferably at least one element of the group of barcode, marking tag, marking line, marking symbol, RFID-tag.

7. The unload system according to any of the preceding claims, **characterized in that** transport means (3) comprises moving means (31) suitable to move the transport means (3) close to the objects (2) to be unloaded.

8. The unload system according to any of the preceding claims, **characterized in that** the transport means (3) is at least one element of the group of conveyor belt, roller belt, chute or combinations thereof.

9. The unload system according to any of the preceding claims, **characterized in that** the the lifting means (4) comprise at least one element of the group of hydraulic actuators, electric actuators, spindle, hoist motor.

10. The unload system according to any of the preceding claims, **characterized in that** the lifting means (4) are suitable to tilt the platform (41) of an tilting angle towards the transport means (3) in order to facilitate the moving of objects (2) from the pallet (1) to the transport means (3).

11. The unload system according to claim 10, **characterized in that** the platform (41) comprises fixation means (45) or a cover (45) at least partly covering the platform (41) at least partly made of a material with a high static friction coefficient to prevent the pallet (1) from slippage on the tilted platform (41).

12. Method to unload a pallet (1) using an unload system according to claim 1, comprising the steps of
- placing a pallet (1) with loaded objects (2) on top of a platform (41),
- adjusting the vertical position of the platform (41) in order to bring the lower surface of the uppermost objects (L2) essentially to the same level as the loading level (L3) of the transport means (3),
- moving the uppermost objects (2) in an essentially horizontal direction (6) to the transport means (3), and
- repeating steps two and three until the pallet (1) is unloaded.

13. Method to unload a pallet (1) according to claim 12, **characterized in that** the step of adjusting the vertical position of the platform (41) comprises the steps of
- automatically detecting the lower surface (L2) of the uppermost objects (2) with an detection system (7, 8) comprising an optical or electromagnetic system to receive dimension information of the objects (2), and
- providing a control signal to a control means, preferably a personal computer, in order to adjust the vertical position of the platform (41) via the lifting means (4).

14. Method to unload a pallet (1) according to claim 12 or 13, **characterized in that** the step of adjusting the vertical position of the platform (41) comprises the step of
- tilting the platform (41) towards the transport means (3) in order to facilitate the moving of objects (2) from the pallet (1) to the transport means (3).

15. Data storage medium comprising a computer program performing the method to unload a pallet (1) according to any of claims 12 to 14.
